# EUROPÄISCHE PATENTSCHRIFT

(11) **EP 3 356 013 B1**
(45) Veröffentlichungstag und Bekanntmachung des Hinweises auf die Patenterteilung: **04.08.2021**
(21) Anmeldenummer: 16775191.6
(22) Anmeldetag: 28.09.2016
(51) Int. Cl.: B01D 53/14

(54) **ABSORPTIONSMITTEL ZUR SELEKTIVEN ENTFERNUNG VON SCHWEFELWASSERSTOFF**
ABSORBENT FOR THE SELECTIVE REMOVAL OF HYDROGEN SULFIDE
AGENT ABSORBANT POUR L'ÉLIMINATION SÉLECTIVE D'ACIDE SULFHYDRIQUE

(30) Priorität: 29.09.2015 EP 15187389
(43) Veröffentlichungstag der Anmeldung: 08.08.2018
(73) Patentinhaber: BASF SE, 67056 Ludwigshafen am Rhein (DE)
(72) Erfinder: VORBERG, Gerald, 67056 Ludwigshafen (DE); NOTZ, Ralf, 67056 Ludwigshafen (DE); INGRAM, Thomas, 67056 Ludwigshafen (DE); SIEDER, Georg, 67056 Ludwigshafen (DE); KATZ, Torsten, 67056 Ludwigshafen (DE); GRUENANGER, Christian, 67056 Ludwigshafen (DE); DEGLMANN, Peter, 67056 Ludwigshafen (DE)
(86) Internationale Anmeldenummer: PCT/EP2016/073025
(87) Internationale Veröffentlichungsnummer: WO 2017/055304

(56) Entgegenhaltungen:
- EP-A1- 2 532 412
- EP-A1- 2 990 090
- FR-A1- 3 001 157
- US-A- 4 892 674
- US-A1- 2008 236 390
- US-A1- 2010 288 125

## Beschreibung

Die vorliegende Erfindung betrifft ein Absorptionsmittel zur Entfernung von sauren Gasen aus Fluidströmen, insbesondere zur selektiven Entfernung von Schwefelwasserstoff, und ein Verfahren zur Entfernung saurer Gase aus einem Fluidstrom, insbesondere zur selektiven Entfernung von Schwefelwasserstoff gegenüber Kohlendioxid.

Die Entfernung von Sauergasen, wie z. B. CO₂, H₂S, SO₂, CS₂, HCN, COS oder Merkaptanen, aus Fluidströmen wie Erdgas, Raffineriegas oder Synthesegas, ist aus unterschiedlichen Gründen von Bedeutung. Der Gehalt an Schwefelverbindungen von Erdgas muss durch geeignete Aufbereitungsmaßnahmen unmittelbar an der Erdgasquelle reduziert werden, denn die Schwefelverbindungen bilden in dem vom Erdgas häufig mitgeführten Wasser Säuren, die korrosiv wirken. Für den Transport des Erdgases in einer Pipeline oder die Weiterverarbeitung in einer Erdgasverflüssigungsanlage (LNG = liquefied natural gas) müssen daher vorgegebene Grenzwerte der schwefelhaltigen Verunreinigungen eingehalten werden. Darüber hinaus sind zahlreiche Schwefelverbindungen bereits in niedrigen Konzentrationen übel riechend und toxisch.

Kohlendioxid muss unter anderem aus Erdgas entfernt werden, weil eine hohe Konzentration an CO₂ bei einer Verwendung als Pipeline- oder Sales Gas den Brennwert des Gases reduziert. Außerdem kann CO₂ in Verbindung mit Feuchtigkeit, die in den Fluidströmen häufig mitgeführt wird, zu Korrosion an Leitungen und Armaturen führen. Eine zu geringe Konzentration an CO₂ ist hingegen ebenfalls unerwünscht, da dadurch der Brennwert des Gases zu hoch sein kann. Üblicherweise liegen die CO₂-Konzentrationen für Pipeline- oder Sales Gas zwischen 1,5 und 3,5 Vol.-%.

Zur Entfernung von Sauergasen werden Wäschen mit wässrigen Lösungen anorganischer oder organischer Basen eingesetzt. Beim Lösen von Sauergasen in dem Absorptionsmittel bilden sich mit den Basen Ionen. Das Absorptionsmittel kann durch Entspannen auf einen niedrigeren Druck und/oder Strippen regeneriert werden, wobei die ionischen Spezies zu Sauergasen zurück reagieren und/oder mittels Dampf ausgestrippt werden. Nach dem Regenerationsprozess kann das Absorptionsmittel wiederverwendet werden.

Ein Verfahren, bei dem alle sauren Gase, insbesondere CO₂ und H₂S, weitestgehend entfernt werden, wird als "Total-Absorption" bezeichnet. In bestimmten Fällen kann es dagegen wünschenswert sein, bevorzugt H₂S vor CO₂ zu absorbieren, z.B. um ein Brennwert-optimiertes CO₂/H₂S-Verhältnis für eine nachgeschaltete Claus-Anlage zu erhalten. In diesem Fall spricht man von einer "selektiven Wäsche". Ein ungünstiges CO₂/H₂S-Verhältnis kann die Leistung und Effizienz der Claus-Anlage durch Bildung von COS/CS₂ und Verkokung des Claus-Katalysators oder durch einen zu geringen Heizwert beeinträchtigen.

Stark sterisch gehinderte sekundäre Amine, wie 2-(2-tert-Butylaminoethoxy)ethanol, und tertiäre Amine, wie Methyldiethanolamin (MDEA), zeigen kinetische Selektivität für H₂S gegenüber CO₂. Diese Amine reagieren nicht direkt mit CO₂; vielmehr wird CO₂ in einer langsamen Reaktion mit dem Amin und mit Wasser zu Bicarbonat umgesetzt - im Gegensatz dazu reagiert H₂S in wässrigen Aminlösungen sofort. Derartige Amine eignen sich daher insbesondere für eine selektive Entfernung von H₂S aus Gasgemischen, die CO₂ und H₂S enthalten.

Die selektive Entfernung von Schwefelwasserstoff findet vielfach Anwendung bei Fluidströmen mit niedrigen Sauergas-Partialdrücken, wie z. B. in Tailgas oder bei der Sauergasanreicherung (Acid Gas Enrichment, AGE), beispielsweise zur Anreicherung von H₂S vor dem Claus-Prozess.

So wurde in der US 4,471,138 gezeigt, dass stark sterisch gehinderte sekundäre Amine, wie 2-(2-tert-Butylaminoethoxy)ethanol, auch in Kombination mit weiteren Aminen wie Methyldiethanolamin, eine deutlich höhere H₂S-Selektivität als Methyldiethanolamin aufweisen. Dieser Effekt wurde unter anderem von Lu et al. in Separation and Purification Technology, 2006, 52, 209-217 bestätigt. Die EP 0 084 943 offenbart die Verwendung von stark sterisch gehinderten sekundären und tertiären Alkanolaminen in Absorptionslösungen zur selektiven Entfernung von Schwefelwasserstoff gegenüber Kohlendioxid aus Gasströmen.

Die EP 134 948 beschreibt ein Absorptionsmittel, das ein alkalisches Material und eine Säure mit einem pKs von 6 oder weniger umfasst. Bevorzugte Säuren sind Phosphorsäure, Ameisensäure oder Salzsäure. Der Säurezusatz soll insbesondere das Strippen H₂S enthaltender saurer Gase effizienter machen.

Die US 4,618,481 offenbart die Entfernung von Schwefelwasserstoff aus Fluidströmen mit einer Absorptionslösung, die ein stark sterisch gehindertes Amin und ein Aminsalz enthält. Die US 4,892,674 offenbart die Entfernung von Schwefelwasserstoff aus Fluidströmen mit einer Absorptionslösung, die ein Amin und ein stark sterisch gehindertes Aminosalz und/oder eine sterisch gehinderte Aminosäure enthält. Das Dokument lehrt unter anderem anhand von Fig. 3, dass die H₂S-Selektivität von MDEA durch Zusatz von 2-(2-tert-Butylaminoethoxy)ethanol-Sulfat erhöht werden kann.

Mandal et al. (in Separation and Purification Technology, 2004, 35, 191-202) beschreiben die selektive H₂S-Entfernung aus Stickstoff-haltigen Fluiden unter Verwendung von Absorptionsmitteln, welche 2-Amino-2-methylpropanol (2-AMP) bzw. MDEA enthalten. Es wurde festgestellt, dass MDEA eine höhere H₂S-Selektivität aufweist als 2-AMP.

Auch bei der Erdgasaufbereitung (Natural Gas Treatment) für Pipelinegas kann eine selektive Entfernung von H₂S gegenüber CO₂ erwünscht sein. Der Absorptionsschritt bei der Erdgasaufbereitung erfolgt üblicherweise bei hohen Drücken von etwa 20 bis 130 bar (absolut). Es liegen in der Regel deutlich höhere Sauergas-Partialdrücke gegenüber beispielsweise der Tailgas-Behandlung oder Kohlevergasung vor, nämlich z.B. mindestens 0,2 bar für H₂S und mindestens 1 bar für CO₂.

Ein Anwendungs-Beispiel in diesem Druckbereich wird in US 4,101,633 offenbart, worin ein Verfahren zur Entfernung von Kohlendioxid aus Gasgemischen beschrieben ist. Es wird ein Absorptionsmittel verwendet, welches mindestens 50% eines sterisch gehinderten Alkanolamins und mindestens 10% eines tertiären Aminoalkohols umfasst. Die US 4,094,957 offenbart ein Anwendungs-Beispiel in diesem Druckbereich, worin ein Verfahren zur Entfernung von Kohlendioxid aus einem Gasgemisch beschrieben ist. Es wird ein Absorptionsmittel verwendet, welches ein basisches Alkalimetallsalz oder -hydroxid, mindestens ein sterisch gehindertes Amin und eine C₄₋₈-Aminosäure umfasst.

In vielen Fällen strebt man bei der Erdgasaufbereitung eine gleichzeitige Entfernung von H₂S und CO₂ an, wobei vorgegebene H₂S-Grenzwerte eingehalten werden müssen, aber eine vollständige Entfernung von CO₂ nicht erforderlich ist. Die für Pipelinegas typische Spezifikation erfordert eine Sauergasentfernung auf etwa 1,5 bis 3,5 Vol.-% CO₂ und weniger als 4 vppm H₂S. In diesen Fällen ist eine maximale H₂S-Selektivität nicht erwünscht.

Die US 2013/0243676 beschreibt ein Verfahren zur Absorption von H₂S und CO₂ aus einem Gasgemisch mit einem Absorptionsmittel, welches einen stark sterisch gehinderten tertiären Etheramintriethylenglykolalkohol oder Derivate davon sowie ein flüssiges Amin umfasst.

Die US2010/0288125 beschreibt ein Verfahren zur Entfernung von Sauergasen aus einem Fluidstrom mit einer wässrigen Absorptionslösung, welche ein Amin, wie ein tertiäres Amin oder ein bistertiäres Diamin, und eine Phosphopnsäure enthält.

Der Erfindung liegt die Aufgabe zu Grunde, ein Absorptionsmittel und Verfahren für die Abtrennung von Schwefelwasserstoff und Kohlendioxid anzugeben, wobei die Regenerationsenergie des Absorptionsmittels möglichst niedrig ist.

Die Aufgabe wird gelöst durch ein Absorptionsmittel zur selektiven Entfernung von Schwefelwasserstoff aus einem Fluidstrom, gemäß Anspruch 1.
c) eine Säure mit einem pKs-Wert von weniger als 6 in einer Menge, so dass der bei 120 °C gemessene pH-Wert der wässrigen Lösung 7,9 bis weniger als 8,8 beträgt.

Zwischen der Säure und den Aminen gemäß a) und/oder b) bilden sich Protonierungsgleichgewichte aus. Die Lage der Gleichgewichte ist temperaturabhängig und das Gleichgewicht ist bei höheren Temperaturen zum freien Oxoniumion und/oder dem Aminsalz mit der niedrigeren Protonierungsenthalpie verschoben. Amine gemäß b) zeigen eine besonders ausgeprägte Temperaturabhängigkeit des Protonierungsgleichgewichts. Dies hat zur Folge, dass bei relativ niedrigeren Temperaturen, wie sie im Absorptionsschritt herrschen, der höhere pH-Wert die effiziente Sauergas-Absorption fördert, während bei relativ höheren Temperaturen, wie sie im Desorptionsschritt herrschen, der niedrigere pH-Wert die Freisetzung der absorbierten Sauergase unterstützt.

Als Maß für die Temperaturabhängigkeit des Protonierungsgleichgewichts kann die Differenz ΔpK_{S} (120-50 °C) zwischen dem bei 120 °C gemessenen pKs-Wert des pH-Promotors und dem bei 50 °C gemessenen pK_{S}-Wert des pH-Promotors dienen. Es wird erwartet, dass eine große ΔpK_{S}-Wertdifferenz des pH-Promotors b) zwischen Absorptions- und Desorptionstemperatur zusammen mit der Einstellung des pH-Werts gemäß c) eine niedrigere Regenerationsenergie bedingt.

Im Allgemeinen beträgt die Gesamtkonzentration von a) und b) in der wässrigen Lösung 10 bis 60 Gew.-%, bevorzugt 20 bis 50 Gew.-%, besonders bevorzugt 30 bis 50 Gew.-%.

Das molare Verhältnis von b) zu a) liegt im Bereich von 0,05 bis 1,0, vorzugsweise 0,1 bis 0,9.

Die wässrige Lösung enthält eine Säure c) mit einem pKs-Wert von weniger als 6 in einer Menge, so dass der bei 120 °C gemessene pH-Wert der wässrigen Lösung 7,9 bis weniger als 8,8 beträgt, vorzugsweise 8,0 bis weniger als 8,8, besonders bevorzugt 8,0 bis weniger als 8,5, ganz besonders bevorzugt 8,0 bis weniger als 8,2.

Es wurde gefunden, dass das Absorptionsmittel innerhalb der oben definierten Grenzen der Zusammensetzung Stabilitätsgrenzen unterliegt. Höhere Säuremengen als angegeben oder ein größeres molares Verhältnis von b) zu a) führen zu einer Verschlechterung der Stabilität und beschleunigter Zersetzung des Absorptionsmittels bei erhöhter Temperatur.

Das erfindungsgemäße Absorptionsmittel enthält als Komponente a) wenigstens ein tertiäres Amin der Formel (I) 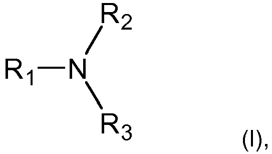 worin R₁ für ein C₂₋₄-Hydroxyalkyl steht und R₂ und R₃ jeweils unabhängig voneinander ausgewählt sind unter C₁₋₃-Alkyl und C₂₋₄-Hydroxyalkyl. Unter einem "tertiären Amin" werden Verbindungen mit wenigstens einer tertiären Aminogruppe verstanden. Das tertiäre Amin enthält vorzugsweise ausschließlich tertiäre Aminogruppen, d. h. es enthält neben wenigstens einer tertiären Aminogruppe keine primären oder sekundären Aminogruppen. Das tertiäre Amin ist vorzugsweise ein Monoamin. Das tertiäre Amin verfügt vorzugsweise nicht über saure Gruppen, wie insbesondere Phosphonsäure-, Sulfonsäure- und/oder Carbonsäuregruppen.

Zu den geeigneten Aminen a) zählen insbesondere tertiäre Alkanolamine wie Bis(2-hydroxyethyl)-methylamin (Methyldiethanolamin, MDEA), Tris(2-hydroxyethyl)amin (Triethanolamin, TEA), Tributanolamin, 2-Diethylaminoethanol (Diethylethanolamin, DEEA), 2-Dimethylaminoethanol (Dimethylethanolamin, DMEA), 3-Dimethylamino-1-propanol (N,N-Dimethylpropanolamin), 3-Diethylamino-1-propanol, 2-Diisopropylaminoethanol (DIEA), N,N-Bis(2-hydroxypropyl)methylamin (Methyldiisopropanolamin, MDI-PA); und Gemische davon.

Besonders bevorzugt ist Methyldiethanolamin (MDEA).

Der aminische pH-Promotor b) ist ausgewählt unter Verbindungen der allgemeinen Formel (II) 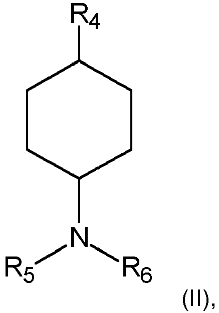 worin R₄ ausgewählt ist unter Wasserstoff; OR₇, worin R₇ ausgewählt ist unter Wasserstoff und C₁₋₄-Alkyl; und NR₈R₉, worin R₈ und R₉ jeweils unabhängig voneinander ausgewählt sind unter C₁₋₅-Alkyl und C₂₋₅-Hydroxyalkyl; und R₅ und R₆ jeweils unabhängig voneinander ausgewählt sind unter C₁₋₅-Alkyl und C₂₋₅-Hydroxyalkyl.

Verbindungen der allgemeinen Formel (II) sind beispielsweise Cyclohexyl-N,N-dimethylamin und 1,4-Bis-(dimethylamino)cyclohexan;
der allgemeinen Formel (III) 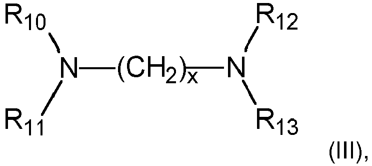 worin R₁₀ ausgewählt ist unter C₂₋₅-Hydroxyalkyl und (Di-C₁₋₄-alkylamino)C₁₋₅-alkyl; R₁₁ ausgewählt ist unter C₁₋₅-Alkyl, C₁₋₅-Aminoalkyl, C₂₋₅-Hydroxyalkyl und (Di-C₁₋₄-alkylamino)-C₁₋₅-alkyl; R₁₂ ausgewählt ist unter C₁₋₅-Alkyl, C₁₋₅-Aminoalkyl, C₂₋₅-Hydroxyalkyl und (Di-C₁₋₄-alkylamino)-C₁₋₅-alkyl; und R₁₃ ausgewählt ist unter C₁₋₅-Alkyl, C₁₋₅-Aminoalkyl, C₂₋₅-Hydroxyalkyl und (Di-C₁₋₄-alkylamino)-C₁₋₅-alkyl; und x eine ganze Zahl von 2 bis 4 ist.

Eine Verbindung der allgemeinen Formel (III) ist beispielsweise Hydroxyethyl-bis-(dimethylaminopropyl)-amin;

Weitere nicht erfindungsgemäße Verbindungen für den aminischen pH-Promotor sind der allgemeinen Formel (IV) 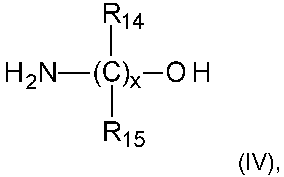 worin R₁₄ und R₁₅ jeweils unabhängig voneinander ausgewählt sind unter Wasserstoff, C₁₋₄-Alkyl und C₁₋₄-Hydroxyalkyl, mit der Maßgabe, dass die Reste R₁₄ und R₁₅ am Kohlenstoffatom, welches direkt an das Stickstoffatom gebunden ist, für C₁₋₄-Alkyl oder C₁₋₄-Hydroxyalkyl stehen; und x eine ganze Zahl von 2 bis 4 ist;
Eine Verbindung der allgemeinen Formel (IV) ist beispielsweise 2-Amino-2-methylpropanol (2-AMP);

Weitere nicht erfindungsgemäße Verbindungen für den aminischen pH-Promotor sind der allgemeinen Formel (V) 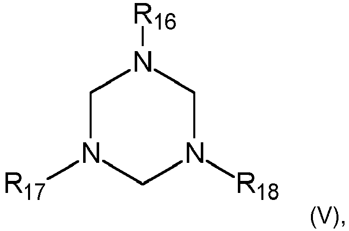 worin R₁₆, R₁₇ und R₁₈ jeweils unabhängig voneinander ausgewählt sind unter C₁₋₅-Alkyl, C₁₋₅-Aminoalkyl, C₂₋₅-Hydroxyalkyl und (Di-C₁₋₄-alkylamino)-C₁₋₅-alkyl.

Eine Verbindung der allgemeinen Formel (V) ist beispielsweise N,N,N',N',N",N"-Hexamethyl-1,3,5-triazin-1 ,3,5(2H,4H,6H)-tripropanamin.

Bevorzugt ist der pH-Promotor b) ausgewählt unter Verbindungen der Formel (II), insbesondere unter Verbindungen mit ausschließlich tertiären Aminogruppen wie beispielsweise Cyclohexyl-N,N-dimethylamin und 1,4-Bis-(dimethylamino)cyclohexan. Am bevorzugtesten ist Cyclohexyl-N,N-dimethylamin.

Die Differenz ΔpK_{S} (120-50 °C) zwischen dem bei 120 °C gemessenen pKs-Wert des pH-Promotors und dem bei 50 °C gemessenen pK_{S}-Wert des pH-Promotors beträgt bevorzugt mindestens 1,50. Bei Aminen mit mehr als einer Dissoziationsstufe gilt diese Bedingung als erfüllt, wenn mindestens eine Dissoziationsstufe diesen Wert für ΔpK_{S} (120-50 °C) aufweist.

Die pKs-Werte werden geeigneter Weise in wässriger Lösung mit einer AminKonzentration von 0,01 mol/kg bei der angegebenen Temperatur durch Bestimmung des pH-Werts am Halbäquivalenzpunkt der zu betrachtenden Dissoziationsstufe mittels Zugabe von Salzsäure (1. Dissoziationsstufe 0,005 mol/kg; 2. Dissoziationsstufe 0,015 mol/kg; 3. Dissoziationsstufe 0,025 mol/kg) ermittelt. Zur Messung wird ein thermostatisiertes, geschlossenes Doppelmantelgefäß verwendet, in dem die Flüssigkeit mit Stickstoff überlagert wurde. Es wurde die pH-Elektrode Hamilton Polylite Plus 120 eingesetzt, die mit Pufferlösungen pH 7 und pH 12 kalibriert wurde.

Der Wert von ΔpK_{S} (120-50 °C) hängt von der Struktur des aminischen pH-Promotors ab. Eine sterische Hinderung mindestens einer Aminogruppe und/oder die Anwesenheit mehrerer Stickstoffatome pro Molekül des pH-Promotors begünstigen hohe Werte von ΔpK_{S} (120-50 °C).

Unter einer sterisch gehinderten primären Aminogruppe wird die Anwesenheit mindestens eines tertiären Kohlenstoffatoms in unmittelbarer Nachbarschaft zum Stickstoffatom der Aminogruppe verstanden. Unter einer sterisch gehinderten sekundären Aminogruppe wird die Anwesenheit mindestens eines sekundären oder tertiären Kohlenstoffatoms in unmittelbarer Nachbarschaft zum Stickstoffatom der Aminogruppe verstanden. Die aminischen pH-Promotoren gemäß b) umfassen auch Verbindungen, die im Stand der Technik als stark sterisch gehinderte Amine bezeichnet werden und einen sterischen Parameter (Taft-Konstante) Es von mehr als 1,75 aufweisen.

Unter einem sekundären Kohlenstoffatom wird ein Kohlenstoffatom, welches außer der Bindung zur sterisch gehinderten Position zwei Kohlenstoff-Kohlenstoff-Bindungen aufweist, verstanden. Unter einem tertiären Kohlenstoffatom wird ein Kohlenstoffatom, welches außer der Bindung zur sterisch gehinderten Position drei Kohlenstoff-Kohlenstoff-Bindungen aufweist, verstanden.

In der nachstehenden Tabelle sind die pKs-Werte beispielhafter Amine bei 50 °C bzw. 120 °C sowie die jeweilige Differenz ΔpK_{S} (120-50 °C) angegeben.

| Amin | Dissoziationsstufe | pKs (50 °C) | pKs (120 °C) | ΔpK_{S} (120-50 °C) |
|---|---|---|---|---|
| Cyclohexyl-N,N-dimethylamin | pK_{S1} | 10,01 | 8,00 | 1,99 |
| 1,4-Bis-(dimethylamino)cyclohexan | pK_{S1} | 9,80 | 8,17 | 1,63 |
| | pK_{S2} | 8,01 | 6,67 | 1,34 |
| Hydroxyethyl-bis-(dimethylaminopropyl)-amin | pK_{S1} | 10,14 | 8,63 | 1,51 |
| | pK_{S2} | 10,13 | 8,62 | 1,51 |
| | pK_{S3} | 10,12 | 8,69 | 1,43 |
| N,N,N',N',N",N"-Hexamethyl-1,3,5-triazin-1,3,5(2H,4H,6H)-tripropanamin** | pK_{S1} | 11,37 | 9,78 | 1,59 |
| | pK_{S2} | 11,23 | 9,35 | 1,88 |
| | pK_{S3} | 10,45 | 7,97 | 2,48 |
| Methyldiethanolamin (MDEA)* | pK_{S1} | 8,12 | 6,94 | 1,18 |

| | | | | |
|---|---|---|---|---|
| *Vergleichsverbindung **nur die ersten drei Dissoziationsstufen bestimmt | | | | |

Das erfindungsgemäße Absorptionsmittel enthält wenigstens eine Säure mit einem pKs-Wert bei 20 °C von weniger als 6, insbesondere weniger als 5. Bei Säuren mit mehreren Dissoziationsstufen und demzufolge mehreren pKs-Werten ist diese Erfordernis erfüllt, wenn einer der pKs-Werte im angegebenen Bereich liegt. Die Säure ist geeigneterweise unter Protonensäuren (Brönstedt-Säuren) ausgewählt.

Die Säure ist ausgewählt unter organischen und anorganischen Säuren. Geeignete organische Säuren umfassen beispielsweise Phosphonsäuren, Sulfonsäuren, Carbonsäuren und Aminosäuren. In bestimmten Ausführungsformen ist die Säure eine mehrbasische Säure.

### Geeignete Säuren sind beispielsweise

Mineralsäuren, wie Salzsäure, Schwefelsäure, Amidoschwefelsäure, Phosphorsäure, Partialester der Phosphorsäure, z. B. Mono- und Dialkyl- und -arylphosphate wie Tridecylphosphat, Dibutylphosphat, Diphenylphosphat und Bis-(2-ethylhexyl)phosphat; Borsäure;

Carbonsäuren, beispielsweise gesättigte aliphatische Monocarbonsäuren wie Ameisensäure, Essigsäure, Propionsäure, Buttersäure, Isobuttersäure, Valeriansäure, Isovaleriansäure, Pivalinsäure, Capronsäure, n-Heptansäure, Caprylsäure, 2-Ethylhexansäure, Pelargonsäure, Neodecansäure, Undecansäure, Laurinsäure, Tridecansäure, Myristinsäure, Pentadecansäure, Palmitinsäure, Margarinsäure, Stearinsäure, Isostearinsäure, Arachinsäure, Behensäure; gesättigte aliphatische Polycarbonsäuren wie Oxalsäure, Malonsäure, Bernsteinsäure, Glutarsäure, Adipinsäure, Pimelinsäure, Korksäure, Azelainsäure, Sebacinsäure, Dodecandisäure; cycloaliphatische Mono- und Polycarbonsäuren wie Cyclohexancarbonsäure, Hexahydrophthalsäure, Tetrahydrophthalsäure, Harzsäuren, Naphthensäuren; aliphatische Hydroxycarbonsäuren wie Glykolsäure, Milchsäure, Mandelsäure, Hydroxybuttersäure, Weinsäure, Apfelsäure, Citronensäure; halogenierte aliphatische Carbonsäuren wie Trichloressigsäure oder 2-Chlorpropionsäure; aromatische Mono- und Polycarbonsäuren wie Benzoesäure, Salicylsäure, Gallussäure, die stellungsisomeren Tolylsäuren, Methoxybenzoesäuren, Chlorbenzoesäuren, Nitrobenzoesäuren, Phthalsäure, Terephthalsäure, Isophthalsäure; technische Carbonsäure-Gemische wie zum Beispiel Versatic-Säuren;

Sulfonsäuren, wie Methylsulfonsäure, Butylsulfonsäure, 3-Hydroxypropylsulfonsäure, Sulfoessigsäure, Benzolsulfonsäure, p-Toluolsulfonsäure, p-Xylolsulfonsäure, 4-Dodecylbenzolsulfonsäure, 1-Naphtalinsulfonsäure, Dinonylnaphthalinsulfonsäure und Dinonylnaphthalin- disulfonsäure, Trifluormethyl- oder Nonafluor-n-butylsulfonsäure, Camphersulfonsäure, 2-(4-(2-Hydroxyethyl)-1-piperazinyl)-ethansulfonsäure (HEPES);
organische Phosphonsäuren, beispielsweise Phosphonsäuren der Formel (VI)

R₁₉-PO₃H (VI)

worin R₁₉ für C₁₋₁₈-Alkyl steht, das gegebenenfalls durch bis zu vier Substituenten substituiert ist, die unabhängig ausgewählt sind unter Carboxy, Carboxamido, Hydroxy und Amino.

Hierzu zählen Alkylphosphonsäuren, wie Methylphosphonsäure, Propylphosphonsäure, 2-Methyl-propylphosphonsäure, t-Butylphosphonsäure, n-Butylphosphonsäure, 2,3-Dimethylbutylphosphonsäure, Octylphosphonsäure; Hydroxyalkylphosphonsäuren, wie Hydroxymethylphosphonsäure, 1-Hydroxyethylphosphonsäure, 2-Hydroxyethylphosphonsäure; Arylphosphonsäuren wie Phenylphosphonsäure, Toluylphosphonsäure, Xylylphosphonsäure, Aminoalkylphosphonsäuren wie Aminomethylphosphonsäure, 1-Aminoethylphosphonsäure, 1-Dimethylaminoethylphosphonsäure, 2-Aminoethylphosphonsäure, 2-(N-Methylamino)ethylphosphonsäure, 3-Aminopropylphosphonsäure, 2-Aminopropylphosphonsäure, 1-Aminopropylphosphonsäure, 1-Aminopropyl-2-chlorpropylphosphonsäure, 2-Aminobutylphosphonsäure, 3-Aminobutylphosphonsäure, 1-Aminobutylphosphonsäure, 4-Aminobutylphosphonsäure, 2-Aminopentylphosphonsäure, 5-Aminopentylphosphonsäure, 2-Aminohexylphosphonsäure, 5-Aminohexylphosphonsäure, 2-Aminooctylphosphonsäure, 1-Aminooctylphosphonsäure, 1-Aminobutylphosphonsäure; Amidoalkylphosphonsäuren wie 3-Hydroxymethylamino-3-oxopropylphosphonsäure; und Phosphonocarbonsäuren wie 2-Hydroxyphosphonoessigsäure und 2-Phosphonobutan-1,2,4-tricarbonsäure.;
Phosphonsäuren der Formel (VII) 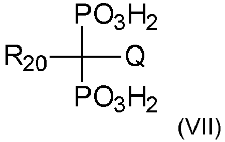 worin R₂₀ für H oder C₁₋₆-Alkyl steht, Q für H, OH oder NY₂ steht und Y für H oder CH₂PO₃H₂ steht, wie 1-Hydroxyethan-1,1-diphosphonsäure;
Phosphonsäuren der Formel (VIII) 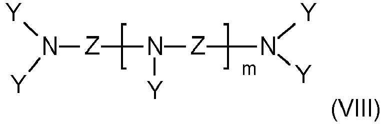 worin Z für C₂₋₆-Alkylen, Cycloalkandiyl, Phenylen, oder C₂₋₆-Alkylen, das durch Cycloalkandiyl oder Phenylen unterbrochen ist, steht, Y für CH₂PO₃H₂ steht und m für 0 bis 4 steht, wie Ethylendiamin-tetra(methylenphosphonsäure), Diethylentriamin-penta(methylenphosphonsäure) und Bis(hexamethylen)triamin-penta(methylenphosphonsäure);
Phosphonsäuren der Formel (IX)

R₂₁-NY₂ (IX)

worin R₂₁ für C₁₋₆-Alkyl, C₂₋₆-Hydroxyalkyl oder Y steht und Y für CH₂PO₃H₂ steht, wie Nitrilo-tris(methylenphosphonsäure) und 2-Hydroxyethyliminobis(methylenphosphonsäure);
Aminocarbonsäuren mit tertiären Aminogruppen oder Aminogruppen, welche mindestens ein sekundäres oder tertiäres Kohlenstoffatom in unmittelbarer Nachbarschaft zur Aminogruppe aufweisen, wie α-Aminosäuren mit tertiären Aminogruppen oder Aminogruppen, welche mindestens ein sekundäres oder tertiäres Kohlenstoffatom in unmittelbarer Nachbarschaft zur Aminogruppe aufweisen, wie N,N-Dimethylglycin (Dimethylaminoessigsäure), N,N-Diethylglycin, Alanin (2-Aminopropionsäure), N-Methylalanin (2-(Methylamino)-propionsäure), N,N-Dimethylalanin, N-Ethylalanin, 2-Methylalanin (2-Aminoisobuttersäure), Leucin (2-Amino-4-methyl-pentan-1-säure), N-Methylleucin, N,N-Dimethylleucin, Isoleucin (1-Amino-2-methylpentansäure), N-Methylisoleucin, N,N-Dimethylisoleucin, Valin (2-Aminoisovaleriansäure), α-Methylvalin (2-Amino-2-methylisovaleriansäure), N-Methylvalin (2-Methylaminoisovaleriansäure), N,N-Dimethylvalin, Prolin (Pyrrolidin-2-carbonsäure), N-Methylprolin, N-Methylserin, N,N-Dimethylserin, 2-(Methylamino)-isobuttersäure, Piperidin-2-carbonsäure, N-Methyl-piperidin-2-carbonsäure,
β-Aminosäuren mit tertiären Aminogruppen oder Aminogruppen, welche mindestens ein sekundäres oder tertiäres Kohlenstoffatom in unmittelbarer Nachbarschaft zur Aminogruppe aufweisen, wie 3-Dimethylaminopropionsäure, N-Methyliminodipropionsäure, N-Methyl-piperidin-3-carbonsäure,
γ-Aminosäuren mit tertiären Aminogruppen oder Aminogruppen, welche mindestens ein sekundäres oder tertiäres Kohlenstoffatom in unmittelbarer Nachbarschaft zur Aminogruppe aufweisen, wie 4-Dimethylaminobuttersäure,
oder Aminocarbonsäuren mit tertiären Aminogruppen oder Aminogruppen, welche mindestens ein sekundäres oder tertiäres Kohlenstoffatom in unmittelbarer Nachbarschaft zur Aminogruppe aufweisen, wie N-Methyl-piperidin-4-carbonsäure.

Unter den anorganischen Säuren sind Phosphorsäure und Schwefelsäure bevorzugt.

Unter den Carbonsäuren sind Ameisensäure, Essigsäure, Benzoesäure, Bernsteinsäure und Adipinsäure bevorzugt.

Unter den Sulfonsäuren sind Methansulfonsäure, p-Toluolsulfonsäure und 2-(4-(2-Hydroxyethyl)-1-piperazinyl)-ethansulfonsäure (HEPES) bevorzugt.

Unter den Phosphonsäuren sind 2-Hydroxyphosphonoessigsäure, 2-Phosphonobutan-1,2,4-tricarbonsäure, 1-Hydroxyethan-1,1-diphosphonsäure, Ethylendiamin-tetra-(methylenphosphonsäure), Diethylentriamin-penta(methylenphosphonsäure), Bis(hexamethylen)triamin-penta(methylenphosphonsäure) (HDTMP) und Nitrilo-tris(methylenphosphonsäure) bevorzugt, wovon 1-Hydroxyethan-1,1-diphosphonsäure besonders bevorzugt ist.

Unter den Aminocarbonsäuren mit tertiären Aminogruppen oder Aminogruppen, welche mindestens ein sekundäres oder tertiäres Kohlenstoffatom in unmittelbarer Nachbarschaft zur Aminogruppe aufweisen, sind N,N-Dimethylglycin und N-Methylalanin bevorzugt.

Besonders bevorzugt ist die Säure eine anorganische Säure.

Das Absorptionsmittel kann auch Additive, wie Korrosionsinhibitoren, Enzyme etc. enthalten. Im Allgemeinen liegt die Menge an derartigen Additiven im Bereich von etwa 0,01 bis 3 Gew.-% des Absorptionsmittels.

Bevorzugt enthält das Absorptionsmittel kein sterisch ungehindertes primäres Amin oder sterisch ungehindertes sekundäres Amin. Verbindungen dieser Art wirken als starke Aktivatoren der CO₂-Absorption. Dadurch kann die H₂S-Selektivität des Absorptionsmittels verloren gehen.

Unter einem sterisch ungehinderten primären Amin werden Verbindungen verstanden, die über primäre Aminogruppen verfügen, an die lediglich Wasserstoffatome oder primäre oder sekundäre Kohlenstoffatome gebunden sind. Unter einem sterisch ungehinderten sekundären Amin werden Verbindungen verstanden, die über sekundäre Aminogruppen verfügen, an die lediglich Wasserstoffatome oder primäre Kohlenstoffatome gebunden sind.

Die Erfindung betrifft außerdem ein Verfahren zur Entfernung saurer Gase aus einem Fluidstrom gemäß Anspruch 7, bei dem man den Fluidstrom mit dem oben definierten Absorptionsmittel in Kontakt bringt.

In der Regel regeneriert man das beladene Absorptionsmittel durch
a) Erwärmung,
b) Entspannung,
c) Strippen mit einem inerten Fluid
oder eine Kombination zweier oder aller dieser Maßnahmen.

Das erfindungsgemäße Verfahren ist geeignet zur Behandlung von Fluiden aller Art. Fluide sind einerseits Gase, wie Erdgas, Synthesegas, Koksofengas, Spaltgas, Kohlevergasungsgas, Kreisgas, Deponiegase und Verbrennungsgase, und andererseits mit dem Absorptionsmittel im Wesentlichen nicht mischbare Flüssigkeiten, wie LPG (Liquefied Petroleum Gas) oder NGL (Natural Gas Liquids). Das erfindungsgemäße Verfahren ist besonders zur Behandlung von kohlenwasserstoffhaltigen Fluidströmen geeignet. Die enthaltenen Kohlenwasserstoffe sind z. B. aliphatische Kohlenwasserstoffe, wie C₁-C₄-Kohlenwasserstoffe, wie Methan, ungesättigte Kohlenwasserstoffe, wie Ethylen oder Propylen, oder aromatische Kohlenwasserstoffe wie Benzol, Toluol oder Xylol.

Das erfindungsgemäße Verfahren bzw. Absorptionsmittel ist zur Entfernung von CO₂ und H₂S geeignet. Neben Kohlendioxid und Schwefelwasserstoff können andere saure Gase im Fluidstrom vorhanden sein, wie COS und Mercaptane. Außerdem können auch SO₃, SO₂, CS₂ und HCN entfernt werden.

Das erfindungsgemäße Verfahren eignet sich zur selektiven Entfernung von Schwefelwasserstoff gegenüber CO₂. Unter "Selektivität für Schwefelwasserstoff" wird vorliegend der Wert des folgenden Quotienten verstanden:

| |
|---|
| y(H2S)_{feed}-y(H2S)ₜᵣₑₐₜ |
| y(H₂S)_{feed} |
| y(CO₂)_{feed}-y(CO₂)ₜᵣₑₐₜ |
| y(CO₂)_{feed} |

worin y(H₂S)_{feed} für den Stoffmengenanteil (mol/mol) von H₂S im Ausgangsfluid, y(H₂S)ₜᵣₑₐₜ für den Stoffmengenanteil im behandelten Fluid, y(CO₂)_{feed} für den Stoffmengenanteil von CO₂ im Ausgangsfluid und y(CO₂)ₜᵣₑₐₜ für den Stoffmengenanteil von CO₂ im behandelten Fluid steht. Die Selektivität für Schwefelwasserstoff beträgt vorzugsweise 1 bis 8.

In bevorzugten Ausführungsformen ist der Fluidstrom ein Kohlenwasserstoffe enthaltender Fluidstrom; insbesondere ein Erdgasstrom. Besonders bevorzugt enthält der Fluidstrom mehr als 1,0 Vol.-% Kohlenwasserstoffe, ganz besonders bevorzugt mehr als 5,0 Vol.-% Kohlenwasserstoffe, am meisten bevorzugt mehr als 15 Vol.-% Kohlenwasserstoffe.

Der Schwefelwasserstoff-Partialdruck im Fluidstrom beträgt üblicherweise mindestens 2,5 mbar. In bevorzugten Ausführungsformen liegt im Fluidstrom ein Schwefelwasserstoff-Partialdruck von mindestens 0,1 bar, insbesondere mindestens 1 bar, und ein Kohlendioxid-Partialdruck von mindestens 0,2 bar, insbesondere mindestens 1 bar, vor. Die angegebenen Partialdrücke beziehen sich auf den Fluidstrom beim erstmaligen Kontakt mit dem Absorptionsmittel im Absorptionsschritt.

In bevorzugten Ausführungsformen liegt im Fluidstrom ein Gesamtdruck von mindestens 3,0 bar, besonders bevorzugt mindestens 5,0 bar, ganz besonders bevorzugt mindestens 20 bar vor. In bevorzugten Ausführungsformen liegt im Fluidstrom ein Gesamtdruck von höchstens 180 bar vor. Der Gesamtdruck bezieht sich auf den Fluidstrom beim erstmaligen Kontakt mit dem Absorptionsmittel im Absorptionsschritt.

Im erfindungsgemäßen Verfahren wird der Fluidstrom in einem Absorptionsschritt in einem Absorber in Kontakt mit dem Absorptionsmittel gebracht, wodurch Kohlendioxid und Schwefelwasserstoff zumindest teilweise ausgewaschen werden. Man erhält einen CO₂- und H₂S-abgereicherten Fluidstrom und ein CO₂- und H₂S-beladenes Absorptionsmittel.

Als Absorber fungiert eine in üblichen Gaswäscheverfahren eingesetzte Waschvorrichtung. Geeignete Waschvorrichtungen sind beispielsweise Füllkörper-, Packungs- und Bodenkolonnen, Membrankontaktoren, Radialstromwäscher, Strahlwäscher, Venturi-Wäscher und Rotations-Sprühwäscher, bevorzugt Packungs-, Füllkörper- und Bodenkolonnen, besonders bevorzugt Boden- und Füllkörperkolonnen. Die Behandlung des Fluidstroms mit dem Absorptionsmittel erfolgt dabei bevorzugt in einer Kolonne im Gegenstrom. Das Fluid wird dabei im Allgemeinen in den unteren Bereich und das Absorptionsmittel in den oberen Bereich der Kolonne eingespeist. In Bodenkolonnen sind Sieb-, Glocken- oder Ventilböden eingebaut, über welche die Flüssigkeit strömt. Füllkörperkolonnen können mit unterschiedlichen Formkörpern gefüllt werden. Wärme-und Stoffaustausch werden durch die Vergrößerung der Oberfläche aufgrund der meist etwa 25 bis 80 mm großen Formkörper verbessert. Bekannte Beispiele sind der Raschig-Ring (ein Hohlzylinder), Pall-Ring, Hiflow-Ring, Intalox-Sattel und dergleichen. Die Füllkörper können geordnet, aber auch regellos (als Schüttung) in die Kolonne eingebracht werden. Als Materialien kommen in Frage Glas, Keramik, Metall und Kunststoffe. Strukturierte Packungen sind eine Weiterentwicklung der geordneten Füllkörper. Sie weisen eine regelmäßig geformte Struktur auf. Dadurch ist es bei Packungen möglich, Druckverluste bei der Gasströmung zu reduzieren. Es gibt verschiedene Ausführungen von Packungen z. B. Gewebe- oder Blechpackungen. Als Material können Metall, Kunststoff, Glas und Keramik eingesetzt werden.

Die Temperatur des Absorptionsmittels beträgt im Absorptionsschritt im Allgemeinen etwa 30 bis 100°C, bei Verwendung einer Kolonne beispielsweise 30 bis 70°C am Kopf der Kolonne und 50 bis 100°C am Boden der Kolonne.

Das erfindungsgemäße Verfahren kann einen oder mehrere, insbesondere zwei, aufeinander folgende Absorptionsschritte umfassen. Die Absorption kann in mehreren aufeinander folgenden Teilschritten durchgeführt werden, wobei das die sauren Gasbestandteile enthaltende Rohgas in jedem der Teilschritte mit jeweils einem Teilstrom des Absorptionsmittels in Kontakt gebracht wird. Das Absorptionsmittel, mit dem das Rohgas in Kontakt gebracht wird, kann bereits teilweise mit sauren Gasen beladen sein, d. h. es kann sich beispielsweise um ein Absorptionsmittel, das aus einem nachfolgenden Absorptionsschritt in den ersten Absorptionsschritt zurückgeführt wurde, oder um teilregeneriertes Absorptionsmittel handeln. Bezüglich der Durchführung der zweistufigen Absorption wird Bezug genommen auf die Druckschriften EP 0 159 495, EP 0 190 434, EP 0 359 991 und WO 00100271.

Der Fachmann kann einen hohen Abtrennungsgrad an Schwefelwasserstoff bei einer definierten Selektivität erreichen, indem er die Bedingungen im Absorptionsschritt, wie insbesondere das Absorptionsmittel/Fluidstrom-Verhältnis, die Kolonnenhöhe des Absorbers, die Art der kontaktfördernden Einbauten im Absorber, wie Füllkörper, Böden oder Packungen, und/oder die Restbeladung des regenerierten Absorptionsmittels variiert.

Ein niedriges Absorptionsmittel/Fluidstrom-Verhältnis führt zu einer erhöhten Selektivität, ein höheres Absorptionsmittel/Fluidstrom-Verhältnis führt zu einer unselektiveren Absorption. Da CO₂ langsamer absorbiert wird als H₂S, wird bei einer längeren Verweilzeit mehr CO₂ aufgenommen als bei einer kürzeren Verweilzeit. Eine höhere Kolonne bewirkt daher eine unselektivere Absorption. Böden oder Packungen mit größerem Flüssigkeits-Holdup führen ebenfalls zu einer unselektiveren Absorption. Über die bei der Regeneration eingebrachte Erwärmungsenergie kann die Restbeladung des regenerierten Absorptionsmittels eingestellt werden. Eine geringere Restbeladung des regenerierten Absorptionsmittels führt zu einer verbesserten Absorption.

Das Verfahren umfasst bevorzugt einen Regenerationsschritt, bei dem man das CO₂-und H₂S-beladene Absorptionsmittel regeneriert. Im Regenerationsschritt werden aus dem CO₂- und H₂S-beladenen Absorptionsmittel CO₂ und H₂S und gegebenenfalls weitere saure Gasbestandteile freigesetzt, wobei ein regeneriertes Absorptionsmittel erhalten wird. Vorzugsweise wird das regenerierte Absorptionsmittel anschließend in den Absorptionsschritt zurückgeführt. In der Regel umfasst der Regenerationsschritt wenigstens eine der Maßnahmen Erwärmung, Entspannung und Strippen mit einem inerten Fluid.

Der Regenerationsschritt umfasst bevorzugt eine Erwärmung des mit den sauren Gasbestandteilen beladenen Absorptionsmittels, z. B. mittels eines Aufkochers, Naturum-laufverdampfers, Zwangsumlaufverdampfers, oder Zwangsumlaufentspannungsverdampfers. Die absorbierten Sauergase werden dabei mittels des durch Erhitzens der Lösung gewonnenen Wasserdampfes abgestrippt. Anstelle des Dampfes kann auch ein inertes Fluid, wie Stickstoff, verwendet werden. Der absolute Druck im Desorber liegt normalerweise bei 0,1 bis 3,5 bar, bevorzugt 1,0 bis 2,5 bar. Die Temperatur liegt normalerweise bei 50 °C bis 170 °C, bevorzugt bei 80 °C bis 130 °C, wobei die Temperatur natürlich vom Druck abhängig ist.

Der Regenerationsschritt kann alternativ oder zusätzlich eine Druckentspannung umfassen. Diese beinhaltet mindestens eine Druckentspannung des beladenen Absorptionsmittels von einem hohen Druck, wie er bei der Durchführung des Absorptionsschritts herrscht, auf einen niedrigeren Druck. Die Druckentspannung kann beispielsweise mittels eines Drosselventils und/oder einer Entspannungsturbine geschehen. Die Regeneration mit einer Entspannungsstufe ist beispielsweise beschrieben in den Druckschriften US 4,537, 753 und US 4,553, 984.

Die Freisetzung der sauren Gasbestandteile im Regenerationsschritt kann beispielsweise in einer Entspannungskolonne, z. B. einem senkrecht oder waagerecht eingebauten Flash-Behälter oder einer Gegenstromkolonne mit Einbauten, erfolgen.

Bei der Regenerationskolonne kann es sich ebenfalls um eine Füllkörper-, Packungs-oder Bodenkolonne handeln. Die Regenerationskolonne weist am Sumpf einen Aufheizer auf, z. B. einen Zwangsumlaufverdampfer mit Umwälzpumpe. Am Kopf weist die Regenerationskolonne einen Auslass für die freigesetzten Sauergase auf. Mitgeführte Absorptionsmitteldämpfe werden in einem Kondensator kondensiert und in die Kolonne zurückgeführt.

Es können mehrere Entspannungskolonnen hintereinander geschaltet werden, in denen bei unterschiedlichen Drücken regeneriert wird. Beispielsweise kann in einer Vorentspannungskolonne bei hohem Druck, der typischerweise etwa 1,5 bar oberhalb des Partialdrucks der sauren Gasbestandteile im Absorptionsschritt liegt, und in einer Hauptentspannungskolonne bei niedrigem Druck, beispielsweise 1 bis 2 bar absolut, regeneriert werden. Die Regeneration mit zwei oder mehr Entspannungsstufen ist beschrieben in den Druckschriften US 4,537, 753, US 4,553, 984, EP 0 159 495, EP 0 202 600, EP 0 190 434 und EP 0 121 109.

Wegen der optimalen Abstimmung des Gehalts an den Aminkomponenten und der Säure weist das erfindungsgemäße Absorptionsmittel eine hohe Beladbarkeit mit sauren Gasen auf, die auch leicht wieder desorbiert werden können. Dadurch können bei dem erfindungsgemäßen Verfahren der Energieverbrauch und der Lösungsmittelumlauf signifikant reduziert werden.

Für einen möglichst niedrigen Energiebedarf bei der Regeneration des Absorptionsmittels ist es von Vorteil, wenn eine möglichst große Differenz zwischen dem pH-Wert bei der Temperatur der Absorption und dem pH-Wert bei der Temperatur der Desorption vorliegt, da dies das Abtrennen der Sauergase vom Absorptionsmittel erleichtert.

Die Erfindung wird anhand der beigefügten Zeichnung und der nachfolgenden Beispiele näher veranschaulicht.

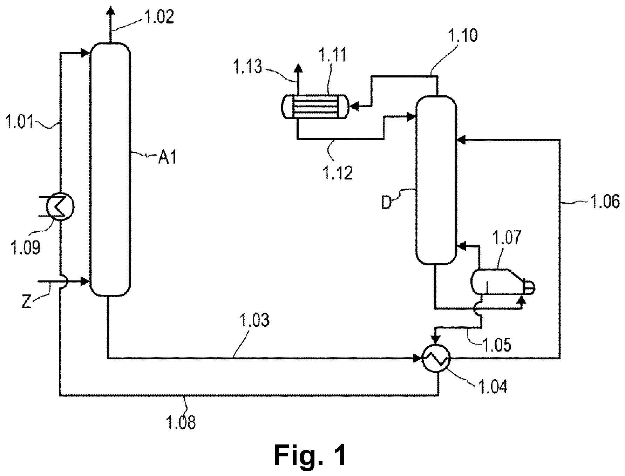

Fig. 1 ist eine schematische Darstellung einer zur Durchführung des erfindungsgemäßen Verfahrens geeigneten Anlage.

Gemäß Fig. 1 wird über die Zuleitung Z ein geeignet vorbehandeltes, Schwefelwasserstoff und Kohlendioxid enthaltendes Gas in einem Absorber A1 mit regeneriertem Absorptionsmittel, das über die Absorptionsmittelleitung 1.01 zugeführt wird, im Gegenstrom in Kontakt gebracht. Das Absorptionsmittel entfernt Schwefelwasserstoff und Kohlendioxid durch Absorption aus dem Gas; dabei wird über die Abgasleitung 1.02 ein an Schwefelwasserstoff und Kohlendioxid abgereichertes Reingas gewonnen.

Über die Absorptionsmittelleitung 1.03, den Wärmetauscher 1.04, in dem das CO₂- und H₂S-beladene Absorptionsmittel mit der Wärme des über die Absorptionsmittelleitung 1.05 geführten, regenerierten Absorptionsmittels aufgeheizt wird, und die Absorptionsmittelleitung 1.06 wird das mit CO₂- und H₂S-beladene Absorptionsmittel der Desorptionskolonne D zugeleitet und regeneriert.

Zwischen Absorber A1 und Wärmetauscher 1.04 kann ein Entspannungsbehälter vorgesehen sein (in Fig. 1 nicht dargestellt) in dem das CO₂- und H₂S-beladene Absorptionsmittel auf z. B. 3 bis 15 bar entspannt wird.

Aus dem unteren Teil der Desorptionskolonne D wird das Absorptionsmittel in den Aufkocher 1.07 geführt, wo es erhitzt wird. Der hauptsächlich wasserhaltige Dampf wird in die Desorptionskolonne D zurückgeführt, während das regenerierte Absorptionsmittel über die Absorptionsmittelleitung 1.05, den Wärmetauscher 1.04, in dem das regenerierte Absorptionsmittel das CO₂- und H₂S-beladene Absorptionsmittel aufheizt und selbst dabei abkühlt, die Absorptionsmittelleitung 1.08, den Kühler 1.09 und die Absorptionsmittelleitung 1.01 dem Absorber A1 wieder zugeführt wird. Anstelle des gezeigten Aufkochers können auch andere Wärmetauschertypen zur Erzeugung des Strippdampfes eingesetzt werden, wie ein Naturumlaufverdampfer, Zwangsumlaufverdampfer, oder Zwangsumlaufentspannungsverdampfer. Bei diesen Verdampfertypen wird ein gemischtphasiger Strom aus regeneriertem Absorptionsmittel und Strippdampf in den Sumpf der Desorptionskolonne D zurückgefahren, wo die Phasentrennung zwischen dem Dampf und dem Absorptionsmittel stattfindet. Das regenerierte Absorptionsmittel zum Wärmetauscher 1.04 wird entweder aus dem Umlaufstrom vom Sumpf der Desorptionskolonne D zum Verdampfer abgezogen, oder über eine separate Leitung direkt aus dem Sumpf der Desorptionskolonne D zum Wärmetauscher 1.04 geführt.

Das in der Desorptionskolonne D freigesetzte CO₂- und H₂S-haltige Gas verlässt die Desorptionskolonne D über die Abgasleitung 1.10. Es wird in einen Kondensator mit integrierter Phasentrennung 1.11 geführt, wo es von mitgeführtem Absorptionsmitteldampf getrennt wird. In dieser und allen andern zur Durchführung des erfindungsgemäßen Verfahrens geeigneten Anlagen können Kondensation und Phasentrennung auch getrennt voneinander vorliegen. Anschließend wird eine hauptsächlich aus Wasser bestehende Flüssigkeit über die Absorptionsmittelleitung 1.12 in den oberen Bereich der Desorptionskolonne D geführt, und ein CO₂- und H₂S-haltiges Gas über die Gasleitung 1.13 ausgeführt.

### Beispiele

In den Beispielen werden folgende Abkürzungen verwendet:
- MDEA:: Methyldiethanolamin
- HMTATPA:: N,N,N',N',N",N"-Hexamethyl-1,3,5-triazin-1,3,5(2H,4H,6H)-tripropanamin
- TBAEE:: 2-(2-(tert-Butylamino)ethoxy)ethanol

### Referenzbeispiel

In diesem Beispiel wurde die Korrelation zwischen dem Wert von pH(50°C)-pH(120°C) und der erforderlichen Regenerationsenergie verschiedener Absorptionsmittel untersucht.

Man bestimmte die Temperaturabhängigkeit des pH-Werts von wässrigen Aminlösungen bzw. teilneutralisierten Aminlösungen im Temperaturbereich von 50 °C bis 120 °C.

Es wurde die pH-Elektrode Hamilton Polylite Plus 120 eingesetzt, die mit Pufferlösungen pH 7 und pH 12 kalibriert wird. Es wurde eine Druckapparatur mit Stickstoff-Überlagerung verwendet, in der der pH-Wert bis 120 °C gemessen werden kann.

In der nachstehenden Tabelle sind der pH (50°C), der pH(120°C) sowie die Differenz pH(50°C) - pH(120°C) für beispielhafte wässrige Zusammensetzungen angegeben.

| Bsp. | wässrige Zusammensetzung | b/a* | pH (50°C) | pH (120°C) | pH(50°C) - pH(120°C) |
|---|---|---|---|---|---|
| R1-1 | 40% MDEA | - | 11,01 | 9,58 | 1,43 |
| R1-2 | 40% MDEA + 0,5% H₃PO₄ | - | 9,76 | 8,29 | 1,47 |
| R-1-3 | 30% MDEA + 15% TBAEE | 0,37 | 11,19 | 9,30 | 1,89 |
| R1-4 | 30% MDEA + 15% TBAEE + 0,8% H₃PO₄ | 0,37 | 10,21 | 8,49 | 1,72 |
| R1-5 | 30% MDEA + 15% TBAEE + 1,6% H₃PO₄ | 0,37 | 9,82 | 8,06 | 1,76 |
| R1-6 | 30% MDEA + 15% TBAEE + 0,6% H₂SO₄ | 0,37 | 10,21 | 8,40 | 1,81 |
| R1-7 | 30% MDEA + 15% TBAEE + 0,8% H₂SO₄ | 0,37 | 9,89 | 8,16 | 1,73 |
| R1-8 | 30% MDEA + 15% TBAEE + 1,2% H₂SO₄ | 0,37 | 9,79 | 8,13 | 1,66 |
| R1-9 | 30% MDEA + 15% TBAEE + 1,6% H₂SO₄ | 0,37 | 9,77 | 7,90 | 1,87 |
| R1-10 | 35% MDEA + 10% 4-Hydroxy-2,2,6,6-tetramethylpiperidin + 0,9% H₂SO₄ | 0,22 | 9,87 | 8,21 | 1,66 |
| R1-11 | 35% MDEA + 10% 4-Hydroxy-2,2,6,6-tetramethylpiperidin + 1,2% H₂SO₄ | 0,22 | 9,68 | 8,03 | 1,65 |

| | | | | | |
|---|---|---|---|---|---|
| * molares Verhältnis von b / a | | | | | |

Es ist erkennbar, dass in den Beispielen, bei denen die wässrige Zusammensetzung neben MDEA und einer Säure ein weiteres Amin umfasst, eine größere Differenz zwischen den pH-Werten bei 50 und 120 °C vorliegt.

In einer Pilotanlage wurde für wässrige Absorptionsmittel die bei der Regeneration eingebrachte Erwärmungsenergie bei einer definierten H₂S-Konzentration des gereinigten Gases untersucht.

Die Pilotanlage entsprach der Fig. 1. Im Absorber wurde eine strukturierte Packung verwendet. Es herrschte ein Druck von 60 bar. Die Packungshöhe im Absorber betrug 3,2 m bei einem Kolonnendurchmesser von 0,0531 m. Im Desorber wurde eine strukturierte Packung verwendet. Es herrschte ein Druck von 1,8 bar. Die Packungshöhe des Desorbers betrug 6,0 m bei einem Durchmesser von 0,085 m.

Ein Gasgemisch aus 93 Vol.-% N₂, 5 Vol.-% CO₂ und 2 Vol.-% H₂S wurde mit einem Massenstrom von 47 kg/h und einer Temperatur von 40 °C in den Absorber geleitet. Im Absorber betrug die Absorptionsmittel-Umlaufrate von 60 kg/h. Die Temperatur des Absorptionsmittels betrug 50 °C. Die Regenerationsenergie wurde so eingestellt, dass eine H₂S-Konzentation von 5 ppm in dem gereinigten Gas erreicht wurde.

Die folgende Tabelle zeigt die Ergebnisse dieser Versuche:

| Bsp. | wässrige Zusammensetzung | Relative Regenerationsenergie* [%] |
|---|---|---|
| R2-1 | 40% MDEA | 100,0 |
| R2-2 | 40% MDEA + 0,5% H₃PO₄ | 73,3 |
| R2-3 | 30% MDEA + 15% TBAEE | 91,6 |
| R2-4 | 30% MDEA + 15% TBAEE + 0,8% H₃PO₄ | 57,8 |
| R2-5 | 30% MDEA + 15% TBAEE + 1,6% H₃PO₄ | 56,9 |
| R2-6 | 30% MDEA + 15% TBAEE + 0,6% H₂SO₄ | 65,1 |
| R2-7 | 30% MDEA + 15% TBAEE + 0,8% H₂SO₄ | 64,8 |
| R2-8 | 30% MDEA + 15% TBAEE + 1,2% H₂SO₄ | 64,1 |
| R2-9 | 30% MDEA + 15% TBAEE + 1,6% H₂SO₄ | 62,2 |
| R2-10 | 35% MDEA + 10% 4-Hydroxy-2,2,6,6-tetramethylpiperidin + 0,9% H₂SO₄ | 70,5 |
| R2-11 | 35% MDEA + 10% 4-Hydroxy-2,2,6,6-tetramethylpiperidin + 1,2% H₂SO₄ | 64,6 |

| | | |
|---|---|---|
| * relativ Beispiel 2-1* | | |

Es ist erkennbar, dass bei Zusammensetzungen mit vergleichbaren pH-Werten bei 120 °C eine größere Differenz pH(50°C) - pH(120°C) eine niedrigere Regenerationsenergie bedingt.

### Beispiel 1

Die Temperaturabhängigkeit des pH-Werts von wässrigen Aminlösungen bzw. teilneutralisierten Aminlösungen im Temperaturbereich von 50 °C bis 120 °C wurde wie im Referenzbeispiel bestimmt.

In der nachstehenden Tabelle sind der pH (50°C), der pH(120°C) sowie die Differenz pH(50°C) - pH(120°C) angegeben.

| Bsp. | wässrige Zusammensetzung | b/a ** | pH (50°C) | pH (120°C) | pH(50°C) - pH(120°C) |
|---|---|---|---|---|---|
| 1-1 | 35% MDEA + 10% Cyclohexyl-N,N-dimethylamin + 1,0% H₂SO₄ | 0,27 | 9,62 | 8,05 | 1,57 |
| 1-2 | 30% MDEA + 15% Bis-(dimethylamino)cyclohexan + 2,0% H₂SO₄ | 0,35 | 9,83 | 8,14 | 1,69 |
| 1-3 | 40% MDEA + 12% HMTATPA + 5,15% H₂SO₄ | 0,10 | 9,92 | 8,09 | 1,83 |
| 1-4 | 40% MDEA + 12% HMTATPA + 6,0% H₂SO₄ | 0,10 | 9,71 | 7,90 | 1,81 |
| 1-5 | 40% MDEA + 8,5% Hydroxyethyl-bis(dimethylaminopropyl)amin + 2,0% H₂SO₄ | 0,11 | 9,52 | 7,90 | 1,62 |

Es ist erkennbar, dass die aufgeführten Absorptionsmittel eine relativ große Differenz pH(50°C) - pH(120°C) aufweisen. Dies dient im Hinblick auf die Ergebnisse des Referenzbeispiels als Indiz für eine niedrige erforderliche Regenerationsenergie.

## Patentansprüche

1. Absorptionsmittel zur selektiven Entfernung von Schwefelwasserstoff gegenüber Kohlendioxid aus einem Fluidstrom, umfassend eine wässrige Lösung, umfassend:
a) ein tertiäres Amin der allgemeinen Formel (I) 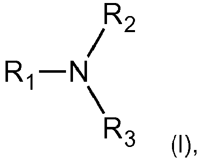 worin R₁ für ein C₂₋₄-Hydroxyalkyl steht und R₂ und R₃ jeweils unabhängig voneinander ausgewählt sind unter C₁₋₃-Alkyl und C₂₋₄-Hydroxyalkyl;
b) einen aminischen pH-Promotor, wobei der aminische pH-Promotor ausgewählt ist unter Verbindungen der allgemeinen Formel (II) 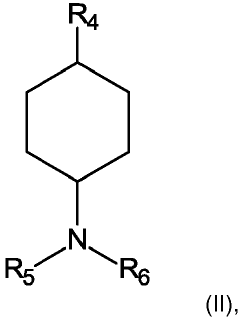 worin R₄ ausgewählt ist unter Wasserstoff; OR₇, worin R₇ ausgewählt ist unter Wasserstoff und C₁₋₄-Alkyl; und NR₈R₉, worin R₈ und R₉ jeweils unabhängig voneinander ausgewählt sind unter C₁₋₅-Alkyl und C₂₋₅-Hydroxyalkyl; und R₅ und R₆ jeweils unabhängig voneinander ausgewählt sind unter C₁₋₅-Alkyl und C₂₋₅-Hydroxyalkyl;
und der allgemeinen Formel (III) 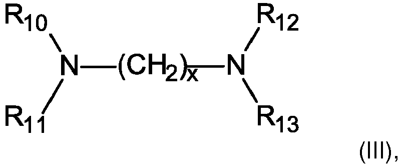 worin
R₁₀ ausgewählt ist unter C₂₋₅-Hydroxyalkyl und (Di-C-₁₋₄-alkylamino)-C₁₋₅-alkyl;
R₁₁ ausgewählt ist unter C₁₋₅-Alkyl, C₁₋₅-Aminoalkyl, C₂₋₅-Hydroxyalkyl und (Di-C₁₋₄-alkylamino)-C₁₋₅-alkyl;
R₁₂ ausgewählt ist unter C₁₋₅-Alkyl, C₁₋₅-Aminoalkyl, C₂₋₅-Hydroxyalkyl und (Di-C₁₋₄-alkylamino)-C₁₋₅-alkyl; und
R₁₃ ausgewählt ist unter C₁₋₅-Alkyl, C₁₋₅-Aminoalkyl, C₂₋₅-Hydroxyalkyl und (Di-C₁₋₄-alkylamino)-C₁₋₅-alkyl; und
x eine ganze Zahl von 2 bis 4 ist;
wobei das molare Verhältnis von b) zu a) im Bereich von 0,05 bis 1,0 liegt; und
c) eine Säure mit einem pKs-Wert von weniger als 6 in einer Menge, so dass der bei 120 °C gemessene pH-Wert der wässrigen Lösung 7,9 bis weniger als 8,8 beträgt.

2. Absorptionsmittel nach Anspruch 1, wobei die Gesamtkonzentration von a) und b) in der wässrigen Lösung 10 bis 60 Gew.-% beträgt.

3. Absorptionsmittel nach Anspruch 1 oder 2, wobei das tertiäre Amin a) Methyldiethanolamin ist.

4. Absorptionsmittel nach einem der vorhergehenden Ansprüche, wobei das molare Verhältnis von b) zu a) im Bereich von 0,1 bis 0,9 liegt.

5. Absorptionsmittel nach einem der vorhergehenden Ansprüche, wobei die Säure ausgewählt ist unter Säuren mit einem pks-Wert von weniger als 5.

6. Absorptionsmittel nach einem der vorhergehenden Ansprüche, wobei die Säure eine anorganische Säure ist.

7. Verfahren zur selektiven Entfernung von Schwefelwasserstoff gegenüber Kohlendioxid aus einem Fluidstrom, bei dem man den Fluidstrom mit einem Absorptionsmittel nach einem der vorhergehenden Ansprüche in Kontakt bringt.

8. Verfahren nach Anspruch 7, wobei der Fluidstrom Kohlenwasserstoffe enthält.

9. Verfahren nach einem der Ansprüche 7 oder 8, wobei der Fluidstrom ein Gasstrom ist, in dem ein Schwefelwasserstoff-Partialdruck von mindestens 0,1 bar und ein Kohlendioxid-Partialdruck von mindestens 0,2 bar vorliegt.

10. Verfahren nach einem der Ansprüche 7 bis 9, wobei der Fluidstrom ein Gasstrom ist, welcher einen Gesamtdruck von mindestens 3,0 bar aufweist.

11. Verfahren nach einem der Ansprüche 7 bis 10, wobei man das beladene Absorptionsmittel durch
a) Erwärmung,
b) Entspannung,
c) Strippen mit einem inerten Fluid
oder eine Kombination zweier oder aller dieser Maßnahmen regeneriert.

## Claims

1. An absorbent for selective removal of hydrogen sulfide over carbon dioxide from a fluid stream, comprising an aqueous solution comprising:
a) a tertiary amine of the general formula (I) 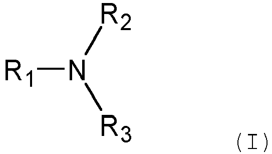 in which R₁ is a C₂₋₄-hydroxyalkyl and R₂ and R₃ are each independently selected from C₁₋₃-alkyl and C₂₋₄-hydroxyalkyl;
b) an aminic pH promoter, the aminic pH promoter being selected from compounds of the general formula (II) 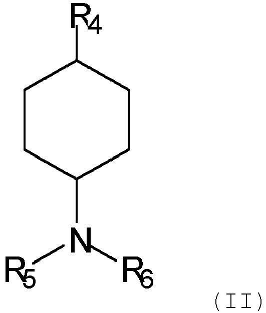 in which R₄ is selected from hydrogen; OR₇ in which R₇ is selected from hydrogen and C₁₋₄-alkyl; and NR₈R₉ in which R₈ and R₉ are each independently selected from C₁₋₅-alkyl and C₂₋₅-hydroxyalkyl; R₅ and R₆ are each independently selected from C₁₋₅-alkyl and C₂₋₅-hydroxyalkyl;
and of the general formula (III) 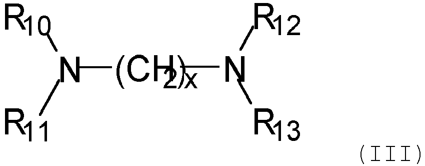 in which
R₁₀ is selected from C₂₋₅-hydroxyalkyl and (di-C₁₋₄-alkylamino) -C₁₋₅-alkyl;
R₁₁ is selected from C₁₋₅-alkyl, C₁₋₅-aminoalkyl, C₂₋₅-hydroxyalkyl and (di-C₁₋₄-alkylamino)-C₁₋₅-alkyl;
R₁₂ is selected from C₁₋₅-alkyl, C₁₋₅-aminoalkyl, C₂₋₅-hydroxyalkyl and (di-C₁₋₄-alkylamino)-C₁₋₅-alkyl;and
R₁₃ is selected from C₁₋₅-alkyl, C₁₋₅-aminoalkyl, C₂₋₅-hydroxyalkyl and (di-C₁₋₄-alkylamino)-C₁₋₅-alkyl; and
x is an integer from 2 to 4;
where the molar ratio of b) to a) is in the range from 0.05 to 1.0; and
c) an acid having a pK_{A} of less than 6 in such an amount that the pH of the aqueous solution measured at 120°C is 7.9 to less than 8.8.

2. The absorbent according to claim 1, wherein the total concentration of a) and b) in the aqueous solution is 10% to 60% by weight.

3. The absorbent according to claim 1 or 2, wherein the tertiary amine a) is methyldiethanolamine.

4. The absorbent according to any one of the preceding claims, wherein the molar ratio of b) to a) is in the range from 0.1 to 0.9.

5. The absorbent according to any one of the preceding claims, wherein the acid is selected from acids having a pK_{A} of less than 5.

6. The absorbent according to any one of the preceding claims, wherein the acid is an inorganic acid.

7. A process for selective removal of hydrogen sulfide over carbon dioxide from a fluid stream, in which the fluid stream is contacted with an absorbent according to any one of the preceding claims.

8. The process according to claim 7, wherein the fluid stream comprises hydrocarbons.

9. The process according to either of claims 7 and 8, wherein the fluid stream is a gas stream in which there is a partial hydrogen sulfide pressure of at least 0.1 bar and a partial carbon dioxide pressure of at least 0.2 bar.

10. The process according to any one of claims 7 to 9, wherein the fluid stream is a gas stream which has a total pressure of at least 3.0 bar.

11. The process according to any one of claims 7 to 10, wherein the laden absorbent is regenerated by
a) heating,
b) decompression,
c) stripping with an inert fluid
or a combination of two or all of these measures.

## Revendications

1. Absorbant pour l'élimination sélective de sulfure d'hydrogène par rapport au dioxyde de carbone d'un flux fluidique, comprenant une solution aqueuse, comprenant
a) une amine tertiaire de formule générale (I) 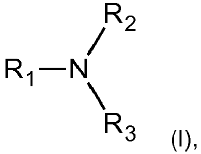 dans laquelle R₁ représente C₂₋₄-hydroxyalkyle et R₂ et R₃ sont choisis, à chaque fois indépendamment l'un de l'autre, parmi C₁₋₃-alkyle et C₂₋₄-hydroxyalkyle ;
b) un promoteur du pH à fonction amine, le promoteur du pH à fonction amine étant choisi parmi les composés de formule générale (II) 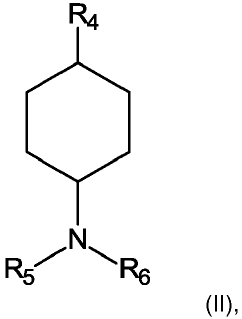 dans laquelle R₄ est choisi parmi hydrogène ; OR₇, où R₇ est choisi parmi hydrogène et C₁₋₄-alkyle ; et NR₈R₉, où R₈ et R₉ sont choisis, à chaque fois indépendamment l'un de l'autre, parmi C₁₋₅-alkyle et C₂₋₅-hydroxyalkyle ; et R₅ et R₆ sont choisis, à chaque fois indépendamment l'un de l'autre, parmi C₁₋₅-alkyle et C₂₋₅-hydroxyalkyle ;
et de formule générale (III) 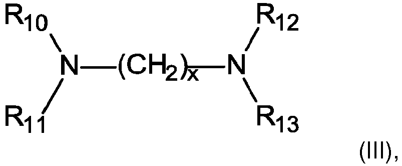 dans laquelle
R₁₀ est choisi parmi C₂₋₅-hydroxyalkyle et (di-C₁₋₄-alkylamino) -C₁₋₅-alkyle ;
R₁₁ est choisi parmi C₁₋₅-alkyle, C₁₋₅-aminoalkyle, C₂₋₅-hydroxyalkyle et (di-C₁₋₄-alkylamino)-C₁₋₅-alkyle ;
R₁₂ est choisi parmi C₁₋₅-alkyle, C₁₋₅-aminoalkyle, C₂₋₅-hydroxyalkyle et (di-C₁₋₄-alkylamino)-C₁₋₅-alkyle ; et
R₁₃ est choisi parmi C₁₋₅-alkyle, C₁₋₅-aminoalkyle, C₂₋₅-hydroxyalkyle et (di-C₁₋₄-alkylamino)-C₁₋₅-alkyle ; et
x représente un nombre entier de 2 à 4 ;
le rapport molaire de b) à a) se situant dans la plage de 0,05 à 1,0 ; et
c) un acide présentant une valeur pKₐ inférieure à 6 en une quantité telle que la valeur du pH mesuré à 120°C de la solution aqueuse est de 7,9 jusqu'à moins de 8,8.

2. Absorbant selon la revendication 1, la concentration totale en a) et en b) dans la solution aqueuse étant de 10 à 60% en poids.

3. Absorbant selon la revendication 1 ou 2, l'amine tertiaire a) étant la méthyldiéthanolamine.

4. Absorbant selon l'une quelconque des revendications précédentes, le rapport molaire de b) à a) se situant dans la plage de 0,1 à 0,9.

5. Absorbant selon l'une quelconque des revendications précédentes, l'acide étant choisi parmi les acides présentant une valeur pkₐ inférieure à 5.

6. Absorbant selon l'une quelconque des revendications précédentes, l'acide étant un acide inorganique.

7. Procédé pour l'élimination sélective de sulfure d'hydrogène par rapport au dioxyde de carbone d'un flux fluidique, dans lequel on met en contact le flux fluidique avec un absorbant selon l'une quelconque des revendications précédentes.

8. Procédé selon la revendication 7, le flux fluidique contenant des hydrocarbures.

9. Procédé selon l'une quelconque des revendications 7 ou 8, le flux fluidique étant un flux gazeux dans lequel la pression partielle de sulfure d'hydrogène est d'au moins 0,1 bar et la pression partielle de dioxyde de carbone est d'au moins 0,2 bar.

10. Procédé selon l'une quelconque des revendications 7 à 9, le flux fluidique étant un flux gazeux qui présente une pression totale d'au moins 3,0 bars.

11. Procédé selon l'une quelconque des revendications 7 à 10, dans lequel on régénère l'absorbant chargé par
a) chauffage,
b) détente,
c) extraction avec un fluide inerte
ou une combinaison de deux ou de toutes ces mesures.
